# NEW EUROPEAN PATENT SPECIFICATION

(11) **EP 0 160 974 B2**
(45) Date of publication and mention of the opposition decision: **23.06.1999**
(45) Mention of the grant of the patent: 01.08.1990
(21) Application number: 85105602.8
(22) Date of filing: 07.05.1985
(51) Int. Cl.: C08F 279/04, C08F 287/00, C08L 55/02

(54) **Modified impact-resistant vinyl-aromatic polymers**
Modifizierte schlagfeste vinylaromatische Polymere
Polymères vinylaromatiques modifiés résistant à l'impact

(30) Priority: 08.05.1984 IT 2084284
(43) Date of publication of application: 13.11.1985
(73) Proprietor: Montedison S.p.A., I-20121 Milan (IT)
(72) Inventor: Materrese, Savino, Verona (IT); Biglione, Gianfranco, Mantova (IT)
(74) Representative: Barz, Peter, Dr.

(56) References cited:
- EP-A- 0 051 336
- EP-A- 0 056 123
- EP-A- 0 103 657
- DE-A- 1 924 860
- DE-A- 1 937 298
- DE-B- 1 300 241

## Description

As is known, as compared to the common impact-resistant polystyrene, impact-resistant vinyl-aromatic copolymers containing an ethylenically unsaturated nitrile exhibit improved mechanical properties and, mainly, a better resistance to cracking under load in the presence of chemical agents, such as e.g. fluorinated products.

From GB-A-2,067,579 it is known that these impact-resistant copolymers containing an ethylenically unsaturated nitrile are particularly suited for the production of cells of refrigerators which must be foamed on their back with polyurethane foam, the foaming agent being Freon (a fluorinated product).

This copolymer may also be useful for the manufacture of containers for fatty foodstuffs which, like in the preceding case, may cause cracking of the usual impact-resistant polystyrene.

It has been observed, however, that impact-resistant vinyl-aromatic copolymers containing an ethylenically unsaturated nitrile are not particularly suitable for injection molding, due to the rather poor appearance of the resulting articles.

These aesthetic problems are troublesome in the case of articles formed by extrusion, but in this case it is possible to eliminate said defects by means of a surface treatment or by applying a film of a glossy and/or transparent material to the surface.

This procedure is usually followed in the production of plates to be utilized in the thermoforming of cells and inner doors of refrigerators.

It is an object of the present invention to provide impact-resistant vinylaromatic copolymers containing an ethylenically unsaturated nitrile which nevertheless do not show the above drawbacks.

More particularly, it is an object of this invention to provide impact-resistant vinylaromatic copolymers containing an ethylenically unsaturated nitrile, which are particularly suitable for injection molding.

It has been found that this and other objects are achievable by utilizing modified impact-resistant vinyl-aromatic copolymers having a gloss of at least 50%, as measured by the glossmeter, and containing from 2 to 10% by weight of an ethylenically unsaturated nitrile and
(i) a butadiene-styrene block rubber of the A-B type in an amount of 8 to 15% by weight or
(ii) a polybutadiene rubber having a 1,4-cis content of 35% and a Mooney viscosity of 35 in an amount of 8% by weight or, if in combination with 10% by weight of rubber (i), in an amount of 5% by weight; the size of the rubber particles being below 1 µm.

EP-A-103 657 is directed to rubber-reinforced copolymers comprising a rubber component the viscosity of which is at least 120 mPa.s. Such copolymers cannot be used for injection molding since the resulting melt flow rate would be too small.

DE-A-1 300 241 describes a process for the production of a graft copolymer which shows good processability and results in products with high surface gloss and impact resistance. Said reference does, however, not mention injection molding and also gives no indication as to the influence of the viscosity of the rubber component on the melt flow rate of the corresponding graft copolymer.

The modified copolymers of the present invention, besides being suitable for extrusion without surface treatment, make it possible to obtain injection-molded articles having a good surface appearance, both when used alone and when used in admixture with other polymers compatible with said copolymers, such as polycarbonates, polbutylene terephthalate, polyethylene terephthalate, etc.

The presently preferred ethylenically unsaturated nitrile is acrylonitrile. Also, other ethylenically unsaturated nitrile monomers, such as methacrylonitrile and the like, can advantageously be employed.

The impact-resistant vinylaromatic copolymers of the present invention are obtainable according to known polymerization processes, provided a mixture of vinyl-aromatic/unsaturated nitrile monmers is used as starting material and the stirring during polymerization is adjusted so as to obtain the characteristics mentioned above.

The most generally employed polymerization processes are, as is known, suspension-polymerization, mass-suspension-polymerization and continuous mass-polymerization, which are broadly described in the literature, such as for example in US-A-2,694,692 and 2,862,906; and in Amos, Polymer Eng. Sci., 14 (1974) 1, pages 1-11.

According to the mass-suspension process, the rubber is first dissolved in the mixture of vinylaromatic/unsaturated nitrile monomers, and the mixture is then subjected to thermal or catalytic polymerization up to a conversion of about 30% and generally not higher than 50%. After this first prepolymerization step, the mass is dispersed in water, under intense stirring and with the aid of suspending agents, and is subjected to polymerization, following an appropriate and well known thermal treatment.

The nitrile monomer can be added either in one portion, in part or during the polymerization.

The reaction temperature may range from 50 to 170°C and preferably is from 100 to 160°C.

Polymerization is generally accomplished in the presence of oil-soluble catalysts, which can be added o either at the beginning or during polymerization. Suitable catalysts are benzoyl-peroxide, lauryl-peroxide, di-cumyl-peroxide, tert.butyl-perbenzoate, di-tert-butyl-peroxide, etc.

The prepolymerization can also be started thermally. If so desired, it is possible to employ a chain transfer agent, such as, e.g., tert-dodecylmercaptane or the like.

At the beginning, during or at the end of the polymerization there may also be added lubricants, such as mineral oil, silicone oil and the like. in order to improve the flowability and processability of the copolymer.

As suspending agents there may be used either water-soluble compounds of organic nature, such as polyvinyl alcohol, acrylic copolymers, cellulose derivatives, partially saponified polyvinyl-acetate, etc., or water-insoluble inorganic compounds, such as tricalcium phosphate, barium phosphate, etc., either alone or in admixture with a surfactant or sodium sulphite. The suspending agents are generally employed in amounts ranging from 0.1 to 5% by weight with respect to the organic phase.

The polymerization can also be conducted directly into suspension without mass-prepolymerization, provided that the stirring of the reaction mass is carried out in a manner such that the above characteristics can be obtained.

According to the continuous mass-polymerization, the rubber solution in the vinylaromatic/unsaturated nitrile monomer mixture is continuously fed to and polymerized in reactors arranged in series, and subjected to stirring, according to an exactly defined temperature cycle, until a conversioon of more than 50% is obtained.

The mixture is then devolatilized under vacuum in order to remove the unreacted monomers, which are then suitably recycled to the first reactor.

The polymerization generally is conducted thermally in the presence of diluents, the most common one being ethylbenzene, at temperatures ranging from 50 to 240°C, and preferably from 100 to 220°C.

As example of a vinylaromatic monomer styrene is to be mentioned in the first place. Styrenes alkylated in the nucleus or in the side chain, such as alpha-methyl-styrene, vinyl-toluene, etc., can also be employed to advantage.

The vinylaromatic monomers can be used either alone or in admixture with one another.

The rubber components employed according to the present invention have been defined above. Suitable polybutadiene rubbers and copolymers of butadiene and styrene possess a glass transition temperature (Tg) below -20°C. These butadiene polymers may contain the monomers in different configurations, for example a different cis-configuration content, trans-configuration content and vinyl content, provided that the above polybutadiene rubber has a 1,4-cis content of 35%.

The vinylaromatic copolymers of the present invention can be employed either as such or in admixture with specific additives for the production of self-extinguishing, antistatic, scratch-proof, semi-expandible, sunlight resistant types, etc.

To determine the characteristics of the vinylaromatic copolymers of the present invention, the following methods were employed:
1. The size of the rubber particles was determined by means of an electron microscope;
2. The IZOD resilience with notch was determined according to ASTM D 256 using 127 × 12.7 × 3.2 mm test pieces obtained by injection molding;
3. The tensile strength and the elastic modulus were determined at 23°C according to ASTM D 638 using test pieces Type I, having a thickness of 3.2 mm, as obtained by injection molding;
4. The Melt Index was determined according to ASTM D 1238 at 200°C and 5 kg;
5. The gloss was determined according to ASTM D 523 by means of a Glossgard® glossmeter on three-step rectangular plates measuring 175 x 75 mm with side injection in the middle of the longer side. Such plates have a plane face, while the other face is interrupted by three steps, whose thickness is respectively decreasing from 4.3 to 1.7 mm. The measurement was carried out on the face of the middle step corresponding to the 3 mm thickness.

Injection molding was effected at a temperature which was 20°C higher than the minimum filling temperature of the mold, while keeping the mold at about 65°C.

### Examples 1 to 11

Into a 160 l reactor equipped with an anchor stirrer, a reflux condenser and a thermometer, there were placed under continuous stirring:
a mixture of styrene-acrylonitrile or styrene-methyl-styrene-acrylonitrile monomers, as shown in Table 1;
a polybutadiene rubber having a 1-4 cis content of 35% and a Mooney viscosity of 35, or a block rubber of the A-B type in the amounts given in Table 1;
oil-type lubricants in the amounts reported in Table 1;
tert.dodecyl-mercaptane, as chain transfer agent, in the amount indicated in Table 1.

After removal of the oxygen present in the reactor by nitrogen flushing, the mixture was subjected to a mass prepolymerization at 115°C for 4 hours, until a conversion of about 30% was obtained. The stirring was effected at 50-150 r/min in order to obtain rubber particles with sizes below 1 µm.

The prepolymerization syrup was transferred into an autoclave equipped with an impeller stirrer. containing water in a weight ratio water/monomers + rubber of 1:1. Thereafter there was added 0.5% by weight, with respect to water, of a suspending agent consisting of acrylic acid/2-ethyl-hexylacrylate copolymer in a weight ratio of 95:5.

After addition of 0.25% by weight, based on the monomer-rubber mixture of tert.butyl-perbenzoate, the mixture, dispersed in water in the form of droplets, was polymerized at 115°C for 4 hours and at 140°C for 2 hours, until the conversion of the monomers to the polymer was complete.

The resulting polymer was separated by centrifugation, repeatedly washed with water and dried at 80°C. The polymer beads thus obtained were activated with 0.15% by weight of a phenolic antioxidant and transformed to granules by means of extrusion.

The properties of the resulting polymers are given in Table 2.

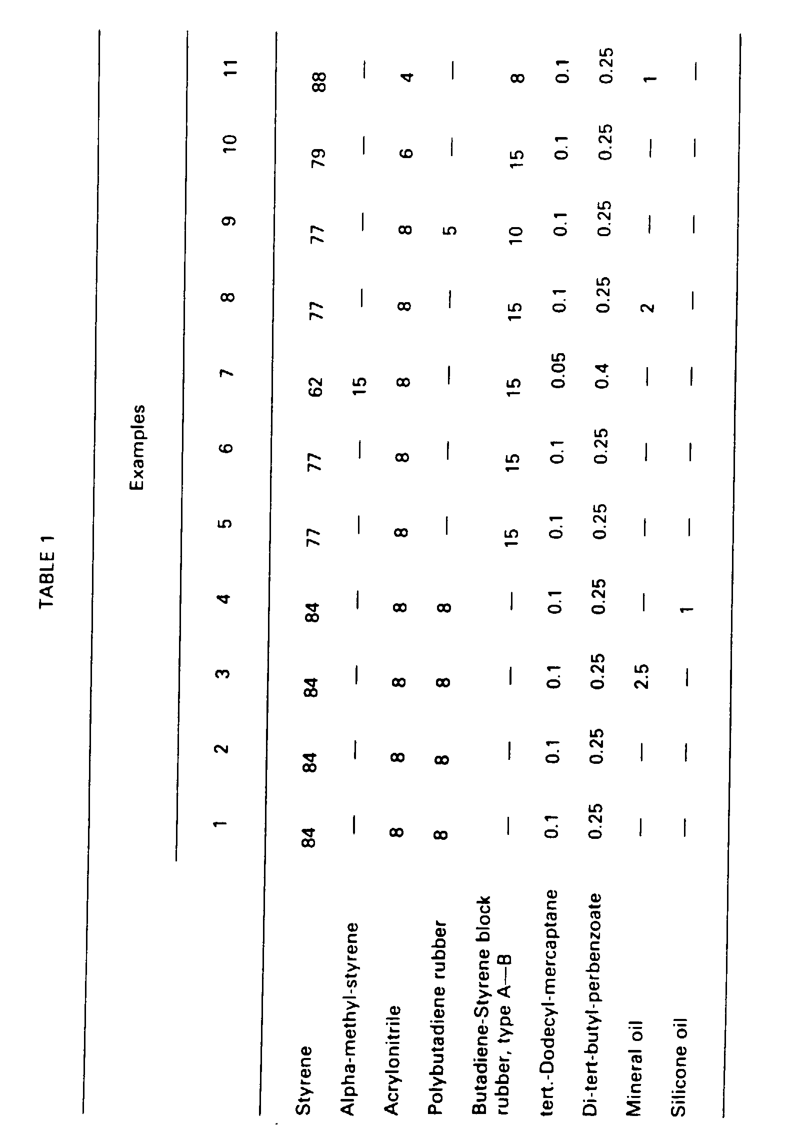

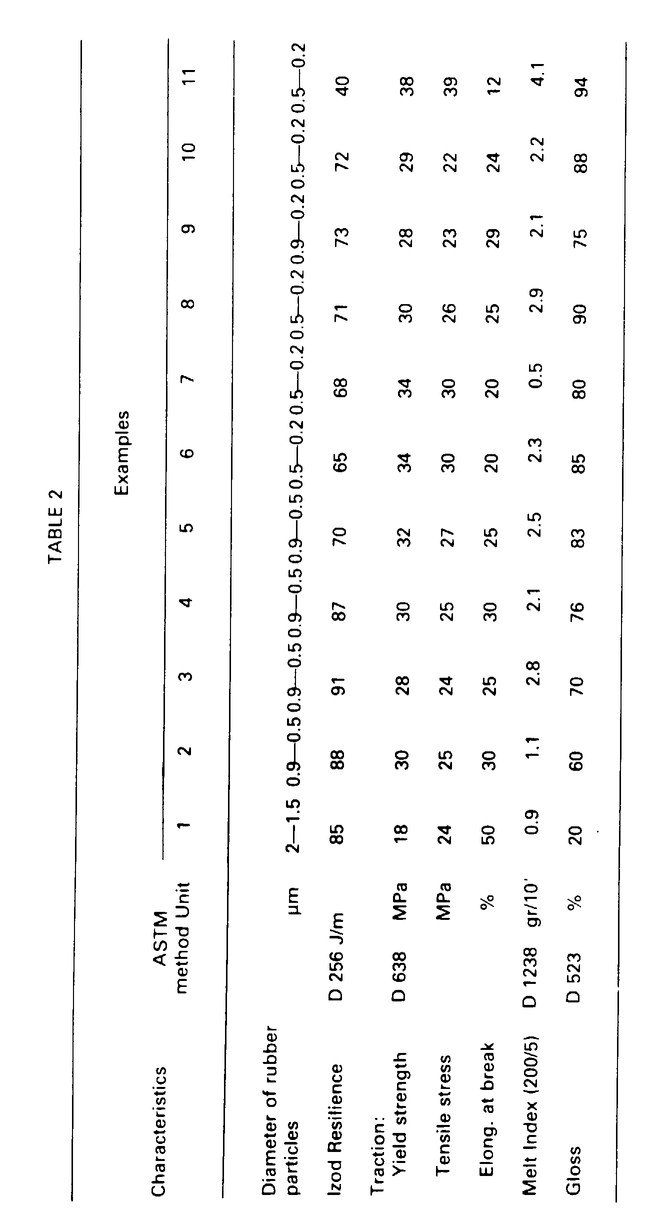

## Claims

1. Modified impact-resistant vinylaromatic polymers having a gloss of at least 50%, as measured by the gloss-meter, and containing from 2 to 10% by weight of an ethylenically unsaturated nitrile and
(i) a butadiene-styrene block rubber of the A-B type in an amount of 8 to 15% by weight or
(ii) a polybutadiene rubber having a 1,4-cis content of 35% and a Mooney viscosity of 35 in an amount of 8% by weight or, if in combination with 10% by weight of rubber (i), in an amount of 5% by weight; the size of the rubber particles being below 1 µm.

2. Modified impact-resistant vinylaromatic polymers according to claim 1, wherein the unsaturated nitrile is acrylonitrile.

3. Modified impact-resistant vinylaromatic polymers according to claim 1 or 2, wherein the vinylaromatic monomer is styrene.

4. Modified impact-resistant vinylaromatic polymers according to claim 1 or 2, wherein the vinylaromatic monomer is a mixture of styrene and alpha-methyl-styrene.

5. Mixtures containing a modified impact-resistant vinyl aromatic copolymer according to any of the preceding claims and another polymer compatible therewith.

6. Mixtures according to claim 5, in which the other compatible polymer is polycarbonate.

7. Mixtures according to claim 5, in which the other compatible polymer is polyethylene terephthalate.

8. Mixtures according to claim 5, in which the other compatible polymer is polybutylene terephthalate.

## Patentansprüche

1. Modifizierte schlagzähe vinylaromatische Polymere, die einen mit dem Glanzmesser gemessenen Glanz von mindestens 50% aufweisen und 2 bis 10 Gew.-% eines ethylenisch ungesättigten Nitrils und
(i) einen Butadien-Styrol-Block-Kautschuk des Typs A-B in einer Menge von 8 bis 15 Gew.-% oder
(ii) einen Polybutadien-Kautschuk mit einem 1,4-cis-Gehalt von 35% und einer Mooney-Viskosität von 35 in einer Menge von 8 Gew.-% oder, falls in Kombination mit Kautschuk (i), in einer Menge von 5 Gew.-%; wobei die Größe der Kautschuk-Teilchen unter 1 µm ist,
enthalten.

2. Modifizierte schlagzähe vinylaromatische Polymere nach Anspruch 1, worin das ungesättigte Nitril Acrylnitril ist.

3. Modifizierte schlagzähe vinylaromatische Polymere nach Anspruch 1 oder 2, worin das vinylaromatische Monomer Styrol ist.

4. Modifizierte schlagzähe vinylaromatische Polymere nach Anspruch 1 oder 2, worin das vinylaromatische Monomer eine Mischung von Styrol und alpha-Methylstyrol ist.

5. Mischungen, enthaltend ein modifiziertes schlagzähes vinylaromatisches Polymer nach irgendeinem der vorangehenden Ansprüche und ein anderes, damit kompatibles Polymer.

6. Mischungen nach Anspruch 5, worin das andere, kompatible Polymer Polycarbonat ist.

7. Mischungen nach Anspruch 5, worin das andere, kompatible Polymer Polyethylenterephthalat ist.

8. Mischungen nach Anspruch 5, worin das andere, kompatible Polymer Polybutylenterephthalat ist.

## Revendications

1. Des polymères vinylaromatiques modifiés à résistance aux chocs ayant une brillance mesurée par un appareil de mesure de brillance d'au moins 50% et contenant de 2 à 10% en poids d'un nitrile insaturé éthyléniquement et
(i) un caoutchouc séquencé de butadiène-styrène de type A-B à raison de 8 à 15% en poids ou,
(ii) un caoutchouc de polyhutadiène ayant une teneur en 1,4-cis de 35% et une viscosité Mooney de 35, à raison de 8% en poids, ou, si en combinaison avec 10% en poids de caoutchouc (i). à raison de 5% en poids,
la taille des particules de caoutchouc étant inférieure à 1 µm.

2. Des polymères vinylaromatiques modifiés à résistance aux chocs selon la revendication 1, dans lesquels le nitrile insaturé est l'acrylonitrile.

3. Des polymères vinylaromatiques modifiés à résistance aux chocs selon la revendication 1 ou 2, dans lesquels le monomère vinylaromatique est le styrène.

4. Des polymères vinylaromatiques modifiés à résistance aux chocs selon la revendication 1 ou 2, dans lesquels le monomère vinylaromatique est un mélange de styrène et d'alpha-méthylstyrène.

5. Des mélanges contenant un copolymère vinylaromatique modifié à résistance aux chocs selon l'une quelconque des revendications précédentes et un autre polymère compatible avec celui-ci.

6. Des mélanges selon la revendication 5, dans lesquels l'autre polymère compatible est un polycarhonate.

7. Des mélanges selon la revendication 5, dans lesquels l'autre polymère compatible est du térephtalate de polyéthylène.

8. Des mélanges selon la revendication 5, dans lesquels l'autre polymère compatible est du térephtalate de polybutylène.
